Europäisches Patentamt

European Patent Office

Office européen des brevets

(11) Numéro de publication : **0 056 553**
**B1**

# (12) FASCICULE DE BREVET EUROPÉEN

(45) Date de publication du fascicule du brevet :
21.11.85

(51) Int. Cl.⁴ : **G 01 H   1/00**

(21) Numéro de dépôt : **81402081.4**

(22) Date de dépôt : **28.12.81**

(54) Procédé de détection de source acoustique, et appareil de contrôle par émission acoustique.

(30) Priorité : **16.01.81 FR 8100776**

(43) Date de publication de la demande :
**28.07.82 Bulletin 82/30**

(45) Mention de la délivrance du brevet :
**21.11.85 Bulletin 85/47**

(84) Etats contractants désignés :
**BE CH DE FR GB IT LI SE**

(56) Documents cités :
**FR-A- 2 164 031
FR-A- 2 262 303
VDI-ZEITSCHRIFT, vol. 122, février 1980, no. 3 München, DE "Komponenten für ein System zur Schallemissionsanalyse", pages 101-102
TECHNISCHES MESSEN, vol. 47, décembre 1980, no. 12 München, DE J. KOLERUS: "Schallemissionsanalyse Teil 2 Verfahren und Geräte", pages 427-434
TECHNISCHES MESSEN, vol. 47, décembre 1980, no. 12, München, DE J. KASSER et al.: "Prüfung industrieller Bauteile mit Hilfe der Schallemissions-analyse", pages 435-440**

(73) Titulaire : **HBS**
**25 rue de Chony**
**F-26500 Bourg les Valence (FR)**

(72) Inventeur : **Audenard, Bernard**
**THOMSON-CSF SCPI 173, bld Haussmann**
**F-75360 Paris Cedex 08 (FR)**
Inventeur : **Marini, Jean**
**THOMSON-CSF SCPI 173, bld Haussmann**
**F-75360 Paris Cedex 08 (FR)**

(74) Mandataire : **Weinmiller, Jürgen et al**
**Zeppelinstrasse 63**
**D-8000 München 80 (DE)**

EP 0 056 553 B1

# 0 056 553

## Description

La présente invention concerne un procédé de détection de source acoustique et un appareil de contrôle par émission acoustique. Elle se rapporte donc au contrôle industriel par émission acoustique.

Dans une installation industrielle, un certain nombre de phénomènes sont générateurs de bruit. Ces phénomènes sont de deux types :

des actions thermiques ou autres amènent des zones locales de contrainte mécanique. Ces contraintes, quand elles dépassent un certain taux de résistance du matériau, peuvent amener des fissurations ou des brisures ;

des actions mécaniques comme des mouvements de fluides dans les tuyauteries (turbulences, béliers, etc.) ou bien comme des chocs par projection peuvent aussi à la longue amener une destruction du matériel.

Pour prévenir de ces accidents, il est apparu nécessaire de contrôler en permanence les zones dont la dégradation amènerait des inconvénients graves (tuyauterie haute pression, cuve de réacteur nucléaire, plateforme support de turboalternateur, etc.).

Dans des réalisations précédentes, il a été prévu des systèmes de surveillance d'émission acoustique comportant une pluralité de capteurs, chacun relié à une chaîne de réception qui détecte l'onde acoustique qui se propage dans le matériau avec une vitesse caractéristique de ce dernier. Un étalonnage permet de connaître celle-ci. La mesure des intervalles de temps séparant la réception de l'onde par chaque capteur permet ou bien la résolution par triangulation hyperbolique du problème de localisation de la source ponctuelle par un ordinateur, ou bien la détermination d'une zone approximative de situation de la source. Des alarmes peuvent être disposées de façon à prendre en compte les sources d'émission acoustique à fort risque d'incident. La théorie de cette technique est décrite en particulier dans la revue « Technisches Messen », vol. 47, Décembre 1980, n° 12, München DE par J. Kasser et al. Un exemple de réalisation en est décrit dans le brevet français 2 262 303. Il y est question de triangulation hyperbolique.

Ces réalisations réclament la mise en œuvre d'importants moyens de calcul. Pour réduire leur complexité, la présente invention propose un procédé de détection et de localisation de source acoustique dans une structure industrielle unidimensionnelle ou bidimensionnelle, la source acoustique étant ponctuelle ou de faible étendue, d'origine accidentelle ou fortuite, et émissive d'une onde admettant dans la structure au moins deux modes d'ondes, ladite onde émise étant détectée et lesdits deux modes se propageant à des vitesses différentes, caractérisé par le fait que la localisation de la source acoustique est réalisée par distinction de mode en évaluant la différence de temps de détection entre deux modes distincts.

Un autre objet de l'invention est un appareil de détection et de localisation de source acoustique dans une structure industrielle unidimensionnelle ou bidimensionnelle, la source acoustique étant ponctuelle ou de faible étendue, d'origine accidentelle ou fortuite, et émissive d'une onde admettant dans la structure au moins deux modes d'onde, ladite onde étant détectée et lesdits deux modes se propageant à des vitesses différentes, ledit appareil comportant :
— une chaîne de détection du signal acoustique,
— une chaîne de traitement du signal,
— des moyens d'exploitation du traitement,
caractérisé par le fait qu'il comporte
— au moins deux capteurs, chacun d'eux prévu pour un mode d'onde acoustique respectif, ou au moins un capteur du type bimode et
— des moyens pour évaluer au moins une différence de temps de détection entre deux modes distincts.

La présente invention sera mieux comprise à l'aide de la description et des dessins annexés qui sont :
la figure 1, une structure industrielle contrôlée avec deux capteurs ;
la figure 2, une structure industrielle contrôlée avec un capteur ;
la figure 3a, une méthode de localisation, unidimensionnelle ;
la figure 3b, une méthode de son extension bidimensionnelle ;
la figure 4, un chronogramme de distinction de mode ;
la figure 5, un schéma d'une chaîne de détection et d'une chaîne de traitement ;
la figure 6, un schéma d'une autre chaîne de détection et d'une autre chaîne de traitement ;
la figure 7, un appareil de localisation analogique ;
la figure 8, un appareil de localisation numérique.

Dans une structure industrielle on trouve divers éléments comme des cuves, des blocs, des tuyaux, des vannes, des conduits, des portes, etc... Un certain nombre de ces éléments sont soumis à des contraintes qui peuvent localement former des sources d'émission acoustique. Ces sources sont d'apparition imprévisibles dans le temps, dans l'espace et de durées variables. On a décrit quelques agents leur donnant naissance. La source est alors constituée par un gradient de contraintes numériques qui persiste un court instant dans une petite zone du matériau. Le gradient s'annule en émettant son énergie de contrainte vers l'extérieur de la zone. L'onde générant des modes quelconques, se propage alors dans des milieux divers. Dans un milieu donné, l'onde de pression peut, selon la forme et la nature

2

# 0 056 553

de l'élément de la structure industrielle considéré, se propager selon des modes différents qui coexistent en modes de propagation ou de polarisation. Différents modes de polarisation d'onde sont :

mode d'onde de surface ;

mode d'onde transverse ;

mode d'onde longitudinal, etc.

Chaque mode transporte une fraction plus ou moins importante de l'énergie de contrainte selon sa prépondérance dans l'onde acoustique globale. Il est notable que chaque mode de propagation est distinct des autres pour de nombreux paramètres physiques : vitesse, durée, amplitude, bande spectrale, etc. Des mesures peuvent donc permettre de sélectionner chaque mode par distinction.

D'autre part, quand deux milieux sont acoustiquement couplés, une fraction de l'onde globale incidente traverse le milieu suivant. Mais les caractéristiques de l'onde transmise dans le milieu suivant, par rapport à celles de l'onde initiale sont modifiées. C'est le cas de la propagation de l'onde émise par une contrainte sur une cuve et sa transmission dans l'air ambiant. Il est alors possible d'obtenir plusieurs informations sur la source acoustique par le biais de plusieurs milieux de propagation.

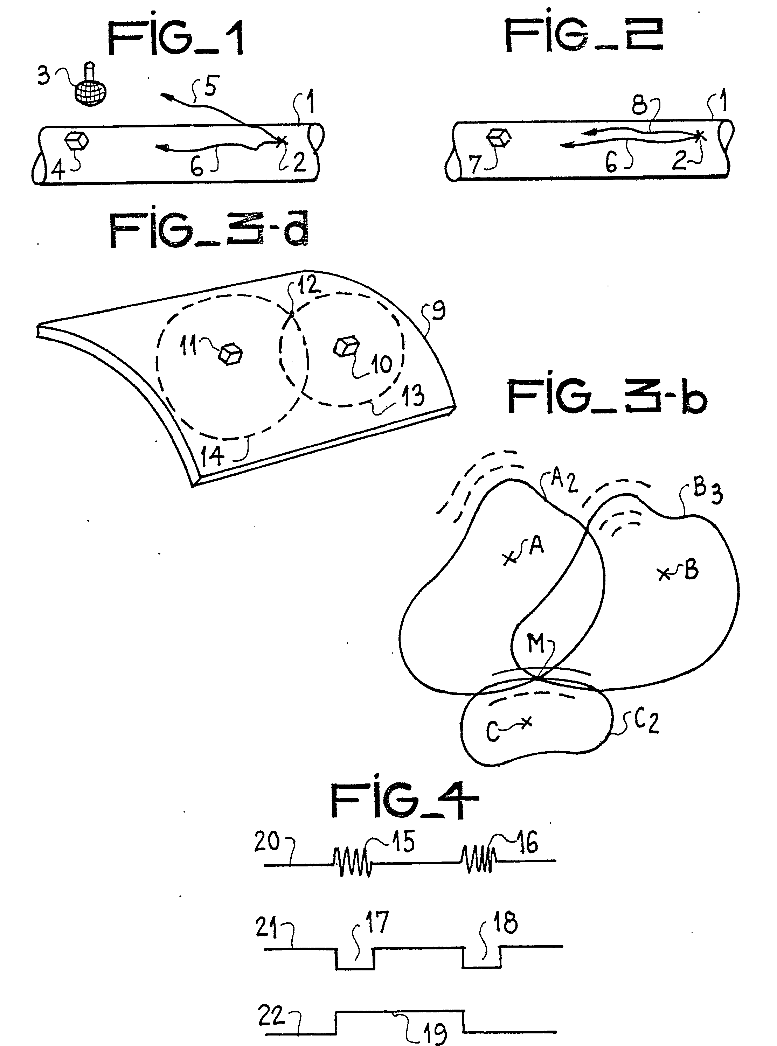

A la figure 1, un cylindre représente une portion de canalisation 1. Une source acoustique 2 apparaît momentanément. Selon l'invention, deux capteurs 3, 4 ont été disposés préalablement pour contrôler la canalisation 1. Le capteur 3 est placé dans l'air à proximité de la canalisation 1. Le capteur 4 est acoustiquement couplé à sa surface. Le capteur 3 reçoit l'onde ambiante 5 émise de la source 2 dans l'air ambiant, tandis que le capteur 4 reçoit l'onde de contrainte 6.

A la figure 2, un seul capteur 7 a été couplé acoustiquement à la canalisation 1. Il reçoit de la source 2 une onde globale qui comprend au moins deux modes de propagation. On n'a représenté que les deux modes prépondérants pour les ondes 8 et 6, qui peuvent être par exemple des ondes de surface et des ondes longitudinales.

Le procédé selon l'invention consiste alors à mesurer au moins un paramètre caractéristique connaissant les caractéristiques du milieu ou des milieux. Dans le cas de la figure 1, on peut, selon l'invention se propager de mesurer l'intervalle de temps qui sépare la réception de l'onde 6 de celle de l'onde 5. Désignant par $t_1$ le temps de parcours de l'onde 6 qui parcourt une distance $d_1$ inconnue jusqu'au capteur 4, à la vitesse connue $v_1$, on a :

$$d_1 = v_1 t_1$$

En changeant d'indice, on peut désigner les mêmes grandeurs pour le capteur 3 et l'onde 5 :

$$d_2 = v_2 t_2$$

$d_1$, $d_2$, $t_1$, $t_2$ sont inconnus. $v_1$, $v_2$ peuvent être mesurés par étalonnage périodiquement à l'aide d'un bruiteur ou émetteur acoustique d'étalonnage. Mais on peut aussi mesurer l'intervalle de temps $\Delta t$ séparant la réception de l'onde 6 de celle de l'onde 5, c'est-à-dire $t_1 - t_2$.

On obtient donc le système de quatre équations linéaires :

$$d_1 = v_1 t_1$$

$$d_2 = v_2 t_2$$

$$d = d_1 - d_2$$

$$\Delta t = t_1 - t_2$$

qui comportent quatre inconnues : $d_1$, $d_2$, $t_1$, $t_2$, trois grandeurs connues : $v_1$, $v_2$ et d distance linéaire entre les deux capteurs et une grandeur fournie par la mesure : $\Delta t$. Ce système se résout d'une manière classique.

Si l'on envisage le cas d'un capteur bimode représenté à la figure 2, on élimine la mesure préliminaire de d, distance entre les deux capteurs, qui est égale à zéro, le capteur n'occupant qu'un point. Les équations sont :

$$v_1 t_1 - v_2 t_2 = 0$$

$$t_1 - t_2 = \Delta t$$

$$d_1 = v_1 t_1$$

$$d_2 = v_2 t_2$$

qui se résout de la même manière, avec pour indice 1 les grandeurs désignant un mode de propagation et pour indice 2 l'autre mode de propagation détecté.

3

Les équations de propagation peuvent être choisies plus complètes et non plus de la forme d = vt sans modifier le procédé de l'invention.

Le procédé selon l'invention tel que décrit ici appelle deux remarques :

Il est écrit pour une structure quasi linéaire de grande dimension longitudinale et de très petite section droite. C'est le cas de certains tuyaux et des fers à béton.

Il faut compléter l'information pour décrire que l'onde globale vient dans un sens ou dans l'autre.

Pour étendre le domaine d'application du procédé selon l'invention, il est proposé à la figure 3 une disposition à deux capteurs bimodes 10, 11 acoustiquement couplés à une plaque 9 courbe, partie par exemple d'une paroi de cuve ou autre. La source 12, placée aléatoirement, a émis une onde en direction du capteur 10 et une autre en direction du capteur 11. Pour chacun de ces capteurs, il a été possible de tracer une ligne d'isodétection 13 ou 14 qui correspond au lieu des sources acoustiques qui émettant vers le capteur considéré 10 ou 11 seraient détectées par lui au même moment et ce pour chaque mode de polarisation de l'onde. La source 12 apparaît clairement comme étant à l'intersection des deux lieux.

Il est remarquable que l'indétermination du sens de propagation de l'onde relativement au capteur se retrouve ici puisque sur la figure 3 on constate que les lieux 13, 14 se coupent deux fois. Pour lever cette indétermination, il est nécessaire d'utiliser trois capteurs. Chacun d'eux reçoit et distingue deux ondes qui lui permettent de choisir un lieu d'isodétection par capteur. L'intersection commune des trois lieux permet de localiser la source avec précision.

Cette méthode de levée d'indétermination a été représentée figure 3b.

Sur cette figure, trois lieux d'isodétection A2, B3, C2 ont été tracés. Leurs formes correspondent à des structures particulières comprenant des matériaux particuliers. Un cas particulier simple, souvent bonne approximation du problème est celui du cercle centré sur le capteur. Ici, autour de chaque capteur A, B, C a été tracé une famille de lieux d'isodétection. Ces lieux sont tracés à partir de relevés de topogrammes sur la structure elle-même. Les trois capteurs étant en place, on place un bruiteur approprié en un grand nombre de points. Les points correspondants à des différences de temps de détection de deux modes égales sont associés en un même lieu dit lieu d'isodétection.

Les familles de lieux d'isodétection étant connues, quand un défaut émetteur acoustique est détecté, la mesure des trois différences de temps de détection intermode permet de sélectionner trois lieux, un par famille, dont l'intersection réalise la localisation du défaut représenté en M.

Pour réduire les inconvénients de l'établissement des topogrammes, il est aussi possible de réaliser directement un calcul de la distance à partir d'une seule mesure préalable : celle de la vitesse de propagation d'une onde acoustique dans la structure surveillée.

Dans certaines configurations, il est possible de s'affranchir de la nécessité de la levée d'indétermination quand un seul des points calculés à partir d'une mesure unique est physiquement possible, les autres ne correspondant pas à un point de la structure surveillée ou bien le système étant incapable de les détecter. Ce dernier cas est celui d'une structure matérielle d'étendue finie, le capteur étant placé près du bord de la structure. Si celle-ci n'est pas acoustiquement couplée à une structure voisine, les seules ondes reçues par le capteur proviennent d'un seul côté de l'espace.

L'invention concerne aussi un appareil de contrôle par émission acoustique mettant en œuvre le procédé selon l'invention. Une chaîne de détection détecte des ondes à caractéristiques différentes qui sont distinguées et analysées par une chaîne de traitement de signal de manière à fournir une information sur la source acoustique accidentelle émettrice des ondes détectées.

Cette information peut être une information de position ou de nature de la source. L'invention concerne aussi une exploitation du paramètre « temps de propagation » qui conduit à la localisation de la source acoustique. A la figure 4, a été représentée l'élaboration d'un signal différence de temps de propagation. Le signal 20 correspond au signal détecté par un capteur bimode. Il apparaît une onde première évanescente 15, puis une autre onde évanescente 16. Si le capteur est prévu pour capter une onde en mode longitudinal et une onde en mode de surface, alors la distinction de mode est aisée. En effet, l'onde de surface de grande amplitude est plus lente que l'onde longitudinale d'amplitude inférieure et est donc détectée après l'onde longitudinale.

Le signal 21 comporte deux créneaux 17 et 18 déclenchés respectivement par les ondes 15 et 16 et de durée fixée par exemple par un monostable de façon à aveugler le système du bruit et des parasites. De plus, la détection est faite avec un comparateur qui ne prend en compte que les ondes dépassant une certaine amplitude.

Le signal 22 est composé à partir du signal 21 grâce à une bascule dont la sortie change d'état à chaque front descendant sur ses entrées. Le créneau 19 obtenu est d'une largeur $T_{19}$ proportionnelle à la différence de temps $t_1 - t_2$ de détection. Il vient :

$$T_{19} = k \cdot (t_1 - t_2)$$

k est un coefficient caractéristique de la chaîne de détection et de traitement. Cette chaîne fournit donc bien le paramètre « différence de temps de détection » des modes distingués.

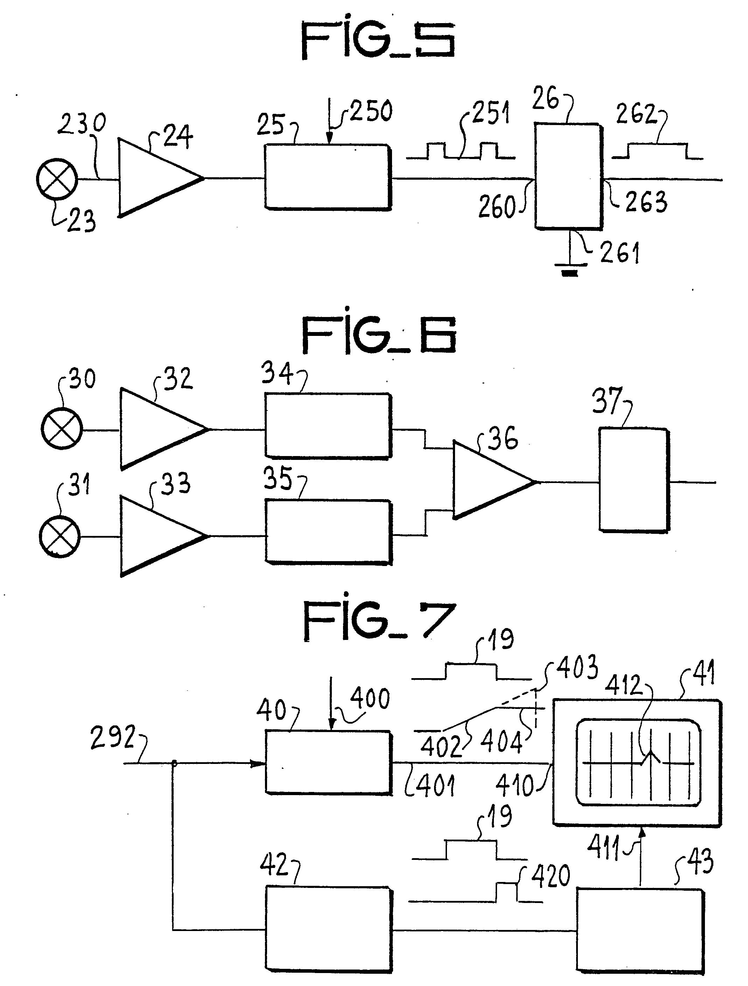

Une chaîne de ce type a été représentée à la figure 5. Un capteur bimode 23 est connecté à un amplificateur 24 qui permet de remettre en forme les signaux délivrés par le capteur 23. Le signal amplifié est transmis à un détecteur d'enveloppe 25 dont la sortie est connectée à l'entrée d'horloge 260 d'une bascule 26. Celle-ci est initialisée manuellement par la commande de RAZ 261 grâce à un interrupteur. La sortie 263 de la bascule délivre un créneau (262) de durée T19.

Le fonctionnement de la chaîne peut être suivi à la figure 5. Le capteur 23 reçoit deux excitations correspondant aux deux modes de propagation de l'onde acoustique émise par le défaut. Le capteur 23 délivre un signal 230. En sortie du détecteur à seuil 25, réglé par son entrée de consigne 250, un signal à deux créneaux 251 est obtenu. La bascule 26 changeant d'état à chaque transition montante sur son entrée horloge on obtient donc bien un créneau 262 dont la durée représente l'intervalle de temps $\Delta t$ de détection de modes.

A la figure 6, on en a représenté une variante analogique avec deux capteurs 30 et 31. C'est le cas du montage de la figure 1. Chaque capteur est relié à une chaîne de détection et de mise en forme qui comporte un amplificateur 32 (ou 33), un détecteur d'enveloppe 34 (ou 35), un amplificateur avec monostable 36 et une bascule 37. Leurs rôles et fonctionnements sont décrits en liaison avec la figure 5. L'amplificateur de chaque chaîne est à gain ajustable par un circuit extérieur.

Pour exploiter le créneau 19 de la figure 4, représentatif à la « différence de temps de détection », on présente deux solutions possibles. La solution analogique décrite à la figure 7 permet une localisation rapide dans le cas d'un cas quasi unidimensionnel. Le créneau 19, par exemple fourni par la bascule 26 de la figure 5 est envoyé à un générateur de rampe de tension 40 alimenté en tension continue 400. A la sortie 401 on obtient une rampe de tension 402 qui commence au front montant de créneau 19 et reste stationnaire 404 à partir du front descendant. Ce signal est appliqué aux plaques 410 de déviation horizontale (ou verticale) d'un tube cathodique 41.

Le créneau 19 est aussi fourni à un détecteur de front descendant 42 qui, sur sa sortie, émet une impulsion 420, quand le créneau 19 retombe au niveau inactif. Cette impulsion 420 est transmise à une commande d'allumage 43 du canon à électrons 411 du tube 41.

L'écran, gradué en distance, grâce à un facteur d'échelle tenant compte de la vitesse de propagation de l'onde acoustique et de la pente de la rampe 403, portera une trace lumineuse 412 qui représentera la position du défaut localisé. La persistance de cette trace peut être assurée par un écran à rémanence, par un déclenchement de cliché photographique de l'écran 41 (par exemple grâce à une détection supplémentaire du front montant du créneau 19) ou encore par des moyens de répétition de l'image électronique.

Les moyens d'exploitation du traitement peuvent suivre une autre solution de type numérique. Elle consiste à disposer d'un ensemble de capteurs bimodes. Chaque capteur bimode est associé à une chaîne de détection du signal ainsi qu'à une chaîne de traitement du signal. En sortie de cette dernière, on obtient dans l'exemple décrit ici, la différence de temps de détection entre les deux modes distingués, de l'onde acoustique. Pour un capteur donné, il existe un lieu et un seul des points d'égale détection, dit lieu d'isodétection, correspondant à une valeur donnée de la différence de temps de détection. On a vu plus haut, que la source était le point commun aux trois lieux associés aux trois capteurs de l'appareil de localisation bidimensionnelle.

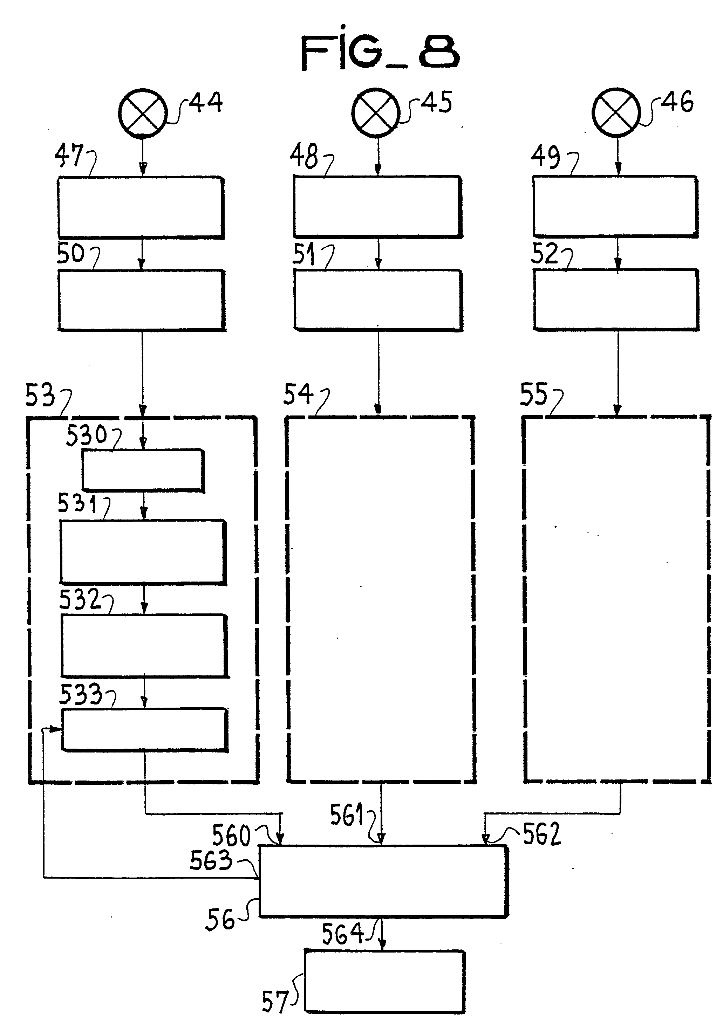

A la figure 8, on a donc représenté un appareil de localisation bidimensionnelle de source acoustique, de type numérique. Trois capteurs bimodes 44-46 sont acoustiquement couplés à la surface surveillée, en des points fixes déterminés. Ces points sont les pôles des lieux d'isodétection préalablement mesurés par la méthode déjà décrite par exemple. Les capteurs 44-46 sont connectés à des chaînes de détection du signal 47-49 et à des chaînes de traitement du signal 50-52, du type par exemple décrit à l'aide de la figure 5. La donnée disponible en chacune des sorties des trois chaînes 50-52 est un créneau 19, envoyé à un sélectionneur de lieu d'isodétection 53-55.

Ce sélectionneur de type numérique a été dessiné en détail figure 8 pour le sélectionneur 53, les sélectionneurs 54, 55 lui étant structurellement identiques.

Le créneau 19 est envoyé à une horloge 530. Cette horloge 530 est initialisée par le front montant du créneau 19 et inhibée par son front descendant. Le mot binaire présent à la sortie de l'horloge 530 est alors représentatif de la valeur de la différence de temps de détection entre les deux modes de propagation distingués par le capteur acoustique 44. Il permet d'engendrer grâce à un générateur d'ordre de lecture 531, une séquence qui comprend la sélection d'une zone d'adresses dans un mémoire préenregistrée 532 à laquelle le générateur 531 est relié et les ordres de transfert de cette zone mémoire à un registre de lieu d'isodétection 533 auquel la mémoire 532 des lieux d'isodétection est relié.

L'appareil décrit comporte aussi un comparateur 56 de données de coordonnées qui reçoit par des entrées 560-562 les données de coordonnées issues des registres de lieu d'isodétecteur comme le registre 533 des sélectionneurs 53-55 qui sont vidés séquentiellement de leurs contenus respectifs par une commande 563 de façon à sélectionner la donnée de coordonnées correspondante à la position de la source acoustique. Cette donnée est alors transmise à un affichage (51) ou bien graphique qui permet de saisir sur un écran la position immédiatement ou bien par afficheur alphanumérique sous forme codée.

Dans tous les cas, une solution bien plus simple de triangulation circulaire peut être adoptée comme il a été décrit plus haut. La seule donnée du rayon suffit au comparateur de données de coordonnées 56 pour trouver la position angulaire, sur un cercle lieu d'isodétection, de la source acoustique à localiser.

Il est possible d'ajouter à l'information de position de la source émettrice une indication de nature de défaut. En réalisant avec un organe répétiteur de la détection, à la fin de l'exploitation, à une cadence compatible avec la croissance géométrique de la source acoustique, par exemple de 32 interrogations par seconde, il est possible de capter plusieurs fois l'onde acoustique avant son évanouissement. De plus, en cas de déplacement du défaut, les points de localisation du défaut ne sont pas identiques mais permettent d'obtenir par exemple l'image de la fissure en temps réel et sa progression. Il est possible de connecter, à la première intervention des capteurs, un appareil d'enregistrement cinématographique qui permet de reconstruire l'image dans le temps de la croissance de la fissure, ce qui peut permettre son étude.

On peut étudier d'autres paramètres que la « différence de temps de détection », comme le spectre par mode de façon à obtenir d'autres représentations du défaut.

Par rapport à une chaîne de détection classique fonctionnant, par exemple selon le procédé à triangulation hyperbolique, on remarque que l'on réduit de un capteur le nombre des capteurs nécessaires à la localisation du défaut source acoustique. Ceci est donc rendu possible grâce à l'augmentation du nombre des paramètres détectés, puisque l'on distingue deux modes au lieu d'une seule onde comme dans le cas classique.

**Revendications**

1. Procédé de détection et de localisation de source acoustique (2 ou 12) dans une structure industrielle unidimensionnelle (1) ou bidimensionnelle (9), la source acoustique étant ponctuelle ou de faible étendue, d'origine accidentelle ou fortuite, et émissive d'une onde admettant dans la structure au moins deux modes d'ondes, ladite onde émise étant détectée et lesdits deux modes se propageant à des vitesses différentes, caractérisé par le fait que la localisation de la source acoustique est réalisée par distinction de mode en évaluant la différence de temps de détection (262) entre lesdits deux modes distincts.

2. Procédé selon la revendication 1 caractérisé par le fait que la distinction de mode est réalisée par la mesure d'une différence de temps de détection entre deux modes distincts, la structure industrielle (1) étant quasi unidimensionnelle.

3. Procédé selon la revendication 1, caractérisé par le fait que la distinction de mode est réalisée par la mesure d'une différence de temps de détection simultanément en chacun de deux points (10, 11) de la structure.

4. Procédé selon la revendication 2 ou 3, caractérisé par le fait que la détection est suivie d'une levée d'indétermination entre au moins deux positions de la source acoustique.

5. Procédé selon la revendication 4, caractérisé par le fait que la levée d'indétermination est réalisée par la mesure d'au moins une différence de temps de détection supplémentaire en un autre point (C) de la structure industrielle.

6. Procédé selon l'une des revendications précédentes, caractérisé par le fait que les deux modes distincts sont des modes de propagation distincts.

7. Procédé selon l'une des revendications 1 à 6, caractérisé par le fait que les deux modes distincts sont des modes de polarisation distincts.

8. Procédé selon l'une des revendications précédentes, caractérisé par le fait que la localisation de la source acoustique est réalisée par intersection (M) de lieux d'isodétection (A2, B3, C2), sélectionnés par mesure des différences de temps de détection.

9. Procédé selon l'une des revendications 1 à 7, caractérisé par le fait que préalablement à la localisation de la source acoustique on mesure les vitesses de propagation des différents modes distincts de l'onde émise par la source acoustique.

10. Procédé selon l'une des revendications précédentes, caractérisé par le fait que la localisation est répétée à une cadence compatible avec la croissance géométrique de la source acoustique.

11. Appareil de détection et de localisation de source acoustique (2 ou 12) dans une structure industrielle unidimensionnelle (1) ou bidimensionnelle (9), la source acoustique étant ponctuelle ou de faible étendue, d'origine accidentelle ou fortuite, et émissive d'une onde admettant dans la structure au moins deux modes d'onde, ladite onde étant détectée (3 et 4, 10 et 11) et lesdits deux modes se propageant à des vitesses différentes, ledit appareil comportant :
— une chaîne de détection du signal acoustique,
— une chaîne de traitement du signal,
— des moyens d'exploitation du traitement,
caractérisé par le fait qu'il comporte
— au moins deux capteurs (3, 4 ; 30, 31), chacun d'eux étant prévu pour un mode acoustique respectif, ou au moins un capteur (7 ; 10, 11 ; 23 ; 44-46) du type bimode et
— des moyens (26, 37, 40, 42, 50-52) pour évaluer au moins une différence de temps de détection entre deux modes distincts.

12. Appareil selon la revendication 11, caractérisé par le fait qu'il comporte au moins un capteur (4) acoustiquement couplé à la structure industrielle (1) et un autre capteur (3) couplé acoustiquement à un milieu adjacent.

13. Appareil selon la revendication 11, caractérisé par le fait qu'il comporte au moins un capteur (7) acoustiquement couplé à la structure industrielle (1), le capteur acoustique (7) étant du type bimode.

14. Appareil de contrôle acoustique selon l'une des revendications 11 à 13, caractérisé par le fait que la chaîne de traitement du signal comporte au moins un détecteur d'enveloppe (25) et une bascule (26) qui commute à chaque transition sur son entrée d'horloge (260).

15. Appareil selon la revendication 11, caractérisé par le fait que chaque capteur (30, 31) correspondant à un mode de propagation déterminé est connecté à un amplificateur (32 ou 33) lui-même relié à un détecteur d'enveloppe (34, 35) reliés à un amplificateur (36), relié à une bascule (37), et en ce que les amplificateurs (32, 33) sont à gain ajustables par un circuit extérieur.

16. Appareil selon l'une des revendications précédentes, caractérisé par le fait qu'il comporte des moyens de comptage du temps (40, 530) initialisés par un changement de niveau d'un signal issu de la chaîne de traitement du signal, et inhibés par un autre changement de niveau du même signal.

17. Appareil selon la revendication 13, caractérisé par le fait que chaque capteur bimode (44-46) est relié à un sélectionneur de lieu d'isodétection (53-55) à travers une chaîne de détection du signal acoustique (47-49) et une chaîne de traitement du signal (50-52) qui comporte reliés successivement :
— une horloge (530) initialisée par une transition du signal émis par la chaîne de traitement (50) et inhibée par la transition suivante,
— un générateur d'ordre de lecture (531),
— une mémoire préenregistrée (532) des lieux d'isodétection,
— un registre (533) du lieu d'isodétection sélectionné,
et en ce que chaque sortie du sélectionneur de lieu d'isodétection (53-55) est relié aux entrées (560-562) d'un comparateur (56) de données de coordonnées qui fournit :
— par une sortie (563) les synchronisations de lecture des divers registres de lieux d'isodétection,
— par une sortie (564), la donnée de coordonnées correspondant à la localisation de la source acoustique à un dispositif d'affichage (57).

18. Appareil selon la revendication 11 caractérisé en ce que les moyens d'exploitation du traitement comportent un dispositif d'affichage (41).

19. Appareil selon la revendication 18, caractérisé par le fait que le dispositif d'affichage (41) est un système à écran bidimensionnel.

20. Appareil selon la revendication 18, caractérisé par le fait que le dispositif d'affichage (57) est un afficheur à code alphanumérique.

21. Appareil selon la revendication 18 ou 19, caractérisé par le fait qu'il comporte un générateur de tension en rampe (40) initialisé par une transition du signal émis par la chaîne de traitement et inhibé par la transition suivante, connecté à une entrée de déviation (410) d'un tube cathodique (41), et en ce que le signal émis par la chaîne de traitement est aussi fourni à un détecteur (42) de seconde transition qui fournit un ordre à une commande (43) d'allumage du canon (411) du tube (41).

22. Appareil selon l'une des revendications précédentes, caractérisé par le fait que les moyens d'exploitation du traitement comportent un organe répétiteur de la détection à la fin de l'exploitation à une cadence compatible avec la croissance géométrique de la source acoustique.

## Claims

1. A method for detecting and localizing an acoustic source (2 or 12) in a one-dimensional or bidimensional industrial structure (1, 9), the acoustic source being a pinpoint source or of small extent, accidental of fortituous in origin and emitting a wave which admits in the structure at least two wave modes, said wave being emitted and said two modes being propagated at different speeds, characterized in that the localization of the acoustic source is achieved by mode distinction through the evaluation of the detection time difference (262) between said two distinct modes.

2. A method according to claim 1, characterized in that the mode distinction is achieved by measuring a detection time difference between two distinct modes, the industrial structure (1) being substantially one-dimensional.

3. A method according to claim 1, characterized in that the mode distinction is achieved by measuring a detection time difference simultaneously at each one of two points (10, 11) of the structure.

4. A method according to claim 2 or 3, characterized in that the detection is followed by removing the lack of determination between at least two positions of the acoustic source.

5. A method as claimed in claim 4, characterized in that the removal of the lack of determination is achieved by measuring at least one additional detection time difference at another point (C) of the industrial structure.

6. A method according to one of the preceding claims, characterized in that the two distinct modes are distinct propagation modes.

7. A method according to one of claims 1 to 6, characterized in that the two distinct modes are distinct polarisation modes.

8. A method according to one of the preceding claims, characterized in that the localization of the acoustic source is achieved by intersection (M) of isodetection localities (A2, B3, C2), selected by measurement of the detection time differences.

9. A method according to any one of claims 1 to 7, characterized in that prior to the localization of the

7

acoustic source, the propagation speeds of the different distinct modes of the wave emitted by the acoustic source are measured.

10. A method according to any one of the preceding claims, characterized in that the localization is repeated at a rate compatible with the geometric growth of the acoustic source.

11. A device for detecting and localizing an acoustic source (2, 12) in an industrial one-dimensional or bidimensional structure (1, 9), the acoustic source being a pinpoint source or of small extent, accidental of fortuituous in origin and emetting a wave admitting in the structure at least two wave modes, said wave being detected (3 and 4, 10 and 11) and said two modes being propagated at different speeds, said device comprising

— a chain for detecting the acoustic signal,
— a chain for processing the signal,
— means for utilizing the processing,
characterized in that it comprises
— at least two sensors (3, 4 ; 30, 31), each one being adapted to one of the acoustic modes, or at least one sensor (7 ; 10, 11 ; 23 ; 44 to 46) of the bimode type and
— means (26, 37, 40, 42, 50 to 52) for evaluating at least one detection time difference between two distinct modes.

12. A device according to claim 11, characterized in that it comprises at least one sensor (4) which is acoustically coupled to the industrial structure (1), and another sensor (3) which is acoustically coupled to an adjacent medium.

13. A device according to claim 11, characterized in that it comprises at least one sensor (7), which is acoustically coupled to the industrial structure (1), the acoustic sensor (7) being of the bimode type.

14. An acoustical control device according to one of claims 11 to 13, characterized in that the signal processing chain comprises at least one envelope detector (25) and one bistable (26) which switches at each transition at its clock input (260).

15. A device according to claim 11, characterized in that each sensor (30, 31) corresponding to a given propagation mode is connected to an amplifier (32 or 33) which itself is connected to an envelope detector (34, 35), these detectors being connected to an amplifier (36) which is connected to a bistable (37), and that the gain of the amplifiers (32, 33) can be adjusted from an external circuit.

16. A device according to any one of the preceding claims, characterized in that it comprises time counting means (40, 530), which are initialized by a change in level of the signal from the signal processing chain, and inhibited by another change in level of the same signal.

17. A device according to claim 13, characterized in that each sensor of the bimode type (44 to 46) is connected to an isodetection locality selector (53 to 55) through a chain for detecting the acoustic signal (47 to 49) and a signal processing chain (50 to 52), which comprises in a series connection relationship
— a clock (530) initialized by a transition of the signal emitted by the processing chain (50) and inhibited by the next following transition,
— a reading-order generator (531),
— a memory (532) in which the isodetection localities are prerecorded,
— a register (533) storing the selected isodetection locality, and that each output of the isodetection locality selector (53 to 55) is connected to one of the inputs (560 to 562) of a comparator (56) for comparing the coordinate date, this comparator furnishing
— via one output (563) the reading synchronizations of the different isodetection locality registers,
— via an output (564) the coordinate data corresponding to the location of the acoustic source to a display device (57).

18. A device according to claim 11, characterized in that the means for utilizing the processing comprise a display device (41).

19. A device according to claim 18, characterized in that the display device (41) is a system including a bidimensional screen.

20. A device according to claim 18, characterized in that the display device (57) is an alphanumerical display.

21. A device according to claims 18 or 19, characterized in that it comprises a ramp voltage generator (40) initialized by a transition of the signal emitted by the processing chain and inhibited by the next following transition, connected to a deflection input (410) of a cathode ray tube (41), and that the signal emitted by the processing chain is further delivered to a detector (42) of the second transition, which delivers an order to a control (43) for firing the gun (411) of the tube (41).

22. A device according to one of the preceding claims, characterized in that the means for utilizing the processing comprises a means for repeating the detection at the end of utilization at a rate which is compatible with the geometric growth of the acoustic source.

**Patentansprüche**

1. Verfahren zur Entdeckung und Ortung akustischer Quellen (2 oder 12) in einer eindimensionalen oder zweidimensionalen industriellen Struktur (1 bzw. 9), wobei die akustische Quelle punktförmig ist oder geringe Ausdehnung besitzt, von zufälligem Ursprung ist und eine Welle aussendet, die in der Struktur mindestens zwei Wellenmodes emittiert, wobei die emittierte Welle detektiert wird und die beiden Modes sich mit unterschiedlichen Geschwindigkeiten ausbreiten, dadurch gekennzeichnet, daß die Ortung der akustischen Quelle durch Modeunterscheidung erfolgt, indem die Zeitdifferenz der Detektion (262) zwischen den beiden unterschiedlichen Ausbreitungsmodes ausgewertet wird.

2. Verfahren nach Anspruch 1, dadurch gekennzeichnet, daß die Unterscheidung der Modes durch Messung einer Zeitdifferenz in der Detektion zwischen zwei getrennten Modes erfolgt, soweit die industrielle Struktur (1) quasi eindimensional ist.

3. Verfahren nach Anspruch 1, dadurch gekennzeichnet, daß die Unterscheidung der Modes durch Messung einer Zeitdifferenz der Detektion gleichzeitig an zwei verschiedenen Punkten (10, 11) der Struktur erfolgt.

4. Verfahren nach Anspruch 2 oder 3, dadurch gekennzeichnet, daß die Detektion von einer Aufhebung einer Unbestimmtheit zwischen mindestens zwei Positionen der akustischen Quelle gefolgt ist.

5. Verfahren nach Anspruch 4, dadurch gekennzeichnet, daß die Aufhebung der Unbestimmtheit durch Messung mindestens einer weiteren Zeitdifferenz der Detektion an einem anderen Punkt (C) der industriellen Struktur erfolgt.

6. Verfahren nach einem der vorhergehenden Ansprüche, dadurch gekennzeichnet, daß die beiden unterschiedlichen Modes unterschiedliche Ausbreitungsmodes sind.

7. Verfahren nach einem der Ansprüche 1 bis 6, dadurch gekennzeichnet, daß die beiden unterschiedlichen Modes unterschiedliche Polarisationsmodes sind.

8. Verfahren nach einem der vorhergehenden Ansprüche, dadurch gekennzeichnet, daß die Ortung der akustischen Quelle durch Intersektion (M) von durch Messung der Detektionszeitdifferenzen ausgewählten Isodetektionsorten (A2, B3, C2) erfolgt.

9. Verfahren nach einem der Ansprüche 1 bis 7, dadurch gekennzeichnet, daß vor der Ortung der akustischen Quelle die Ausbreitungsgeschwindigkeiten der verschiedenen getrennten Modes der von der akustischen Quelle emittierten Welle gemessen werden.

10. Verfahren nach einem der vorhergehenden Ansprüche, dadurch gekennzeichnet, daß die Ortung in Zeitabständen wiederholt wird, die mit der geometrischen Ausbreitung der akustischen Quelle kompatibel sind.

11. Gerät zur Detektion und Ortung einer akustischen Quelle (2 oder 12) in einer eindimensionalen oder zweidimensionalen industriellen Struktur (1, 9), wobei die akustische Quelle punktförmig oder von geringer Ausdehnung sowie von zufälligem Ursprung ist und wobei sie eine Welle aussendet, die in der Struktur mindestens zwei Wellenmodes zuläßt und die Welle detektiert wird (3 und 4, 10 und 11), wobei die beiden Modes mit unterschiedlichen Geschwindigkeiten fortschreiten,
— mit einer Kette zur Detektion des akustischen Signals,
— mit einer Kette zur Verarbeitung des Signals,
— mit Mitteln zur Auswertung der Verarbeitung,
dadurch gekennzeichnet, daß das Gerät mindestens zwei Sonden (3, 4, 30, 31), die je einen akustischen Mode erfassen können, oder mindestens eine Sonde (7 ; 10, 11 ; 23 ; 44 bis 46) vom Bimodetyp und
— Mittel (26, 37, 40, 42, 50 bis 52) aufweist zur Erfassung mindestens einer Detektionszeitdifferenz zwischen zwei unterschiedlichen Modes.

12. Gerät nach Anspruch 11, dadurch gekennzeichnet, daß es mindestens eine Sonde (4), die akustisch an die industrielle Struktur (1) angekoppelt ist, und eine weitere Sonde (3) enthält, die akustisch an ein benachbartes Milieu angekoppelt ist.

13. Gerät nach Anspruch 11, dadurch gekennzeichnet, daß es mindestens eine Sonde (7) aufweist, die an die industrielle Struktur (1) angekoppelt ist und vom Bimodetyp ist.

14. Gerät zur akustischen Kontrolle nach einem der Ansprüche 11 bis 13, dadurch gekennzeichnet, daß die Verarbeitungskette für das Signal mindestens einen Hüllkurvendetektor (25) und eine Kippstufe (26) enthält, die bei jedem Übergang an ihrem Takteingang (260) umkippt.

15. Gerät nach Anspruch 11, dadurch gekennzeichnet, daß jede Sonde (30, 31) entsprechend einem bestimmten Ausbreitungsmodus an einen Verstärker (32 oder 33) angeschlossen ist, der seinerseits mit einem Hüllkurvendetektor (34, 35) verbunden ist, wobei die beiden Hüllkurvendetektoren an einen Verstärker (36) führen, der mit einer Kippstufe (37) verbunden ist, und daß die Verstärkungsgrade der Verstärker (32, 33) von einem äußeren Schaltkreis eingestellt werden können.

16. Gerät nach einem der vorhergehenden Ansprüche, dadurch gekennzeichnet, daß es Mittel zum Zählen der Zeit (40, 530) aufweist, die durch eine Änderung des Signalpegels am Ausgang der Signalverarbeitungskette gestartet werden und von einem weiteren Pegelwechsel desselben Signals gestoppt werden.

17. Gerät nach Anspruch 13, dadurch gekennzeichnet, daß jede Bimodesonde (44 bis 46) an einen Wähler für den Isodetektionsort (53 bis 55) über eine Akustiksignal-Detektionskette (47 bis 49) und eine Signalverarbeitungskette (50 bis 52) angeschlossen ist, die in Hintereinanderschaltung enthält :
— einen Taktgeber (530), der von einem Übergang des von der Verarbeitungskette (50) ausgesandten Signals gestartet und vom nächstfolgenden Übergang gestoppt wird,
— einen Lesebefehlsgenerator (531),

— einen Speicher (532), der vorab mit den Isodetektionsorten geladen wird,

— ein Register (533) für den ausgewählten Isodetektionsort, und daß jeder Ausgang des Wählers des Isodetektionsorts (53 bis 55) an einen der Eingänge (560 bis 562) eines Komparators (56) für den Vergleich der Koordinaten angeschlossen ist, welcher liefert :

— über einen Ausgang (563) die Lesesynchronisierungen der verschiedenen Register für die Isodetektionsorte,

— über einen Ausgang (564) die Angabe der der Ortung der akustischen Quelle entsprechenden Angaben an eine Anzeigevorrichtung (57).

18. Gerät nach Anspruch 11, dadurch gekennzeichnet, daß die Auswertungsmittel für die Verarbeitung eine Anzeigevorrichtung (41) enthalten.

19. Gerät nach Anspruch 18, dadurch gekennzeichnet, daß die Anzeigevorrichtung (41) ein System mit einem zweidimensionalen Bildschirm ist.

20. Gerät nach Anspruch 18, dadurch gekennzeichnet, daß die Anzeigevorrichtung (57) eine alphanumerische Anzeigevorrichtung ist.

21. Gerät nach Anspruch 18 oder 19, dadurch gekennzeichnet, daß es einen Rampenspannungsgenerator (40) enthält, der von einem Übergang des von der Verarbeitungskette ausgesandten Signals startet und vom nächsten Übergang gestoppt wird und der an einen Ablenkeingang (410) einer Kathodenstrahlröhre (41) angeschlossen ist, und daß das von der Verarbeitungskette ausgesandte Signal außerdem an einen Detektor (42) des zweiten Übergangs gesandt wird, der einen Befehl an eine Aufblendsteuerung (43) für den Strahl (411) der Röhre (41) liefert.

22. Gerät nach einem der vorhergehenden Ansprüche, dadurch gekennzeichnet, daß die Mittel zur Auswertung der Verarbeitung ein Organ aufweisen, das die Detektionsvorgänge nach beendeter Auswertung mit solcher Geschwindigkeit wiederholt, die mit der geometrischen Ausbreitung der akustischen Quelle kompatibel ist.

0 056 553

# FIG_1

# FIG_2

# FIG_3-a

# FIG_3-b

# FIG_4

## FIG_5

## FIG_6

## FIG_7

# FIG_8